# EUROPEAN PATENT APPLICATION

(11) **EP 1 643 677 A2**
(43) Date of publication of application: **05.04.2006**
(21) Application number: 05255236.1
(22) Date of filing: 25.08.2005
(51) Int. Cl.: H04L 9/32

(54) **Method of authenticating device using broadcast cryptography**

(30) Priority: 04.10.2004 KR 2004078740
(71) Applicant: Samsung Electronics Co., Ltd., Suwon-si, Gyeonggi-Do (KR)
(72) Inventor: You, Yong-kuk, Seongdong-gu, Seoul (KR); Kim, Chi-hurn, Taean-eup, Hwaseong-si, Gyeonggi-do (KR)
(74) Representative: Waddington, Richard

(57) **Abstract**

A method of authenticating a device having its own device key allocated by an authentication server according to broadcast cryptography is disclosed. The method includes receiving a device identifier of the device and an encrypted device identifier generated by encrypting the device identifier with the device key; and examining whether or not the device identifier is identical to a decrypted device identifier generated by decrypting the encrypted device identifier with another device key corresponding to the device identifier. Therefore, it is possible to authenticate a device having its own device key allocated by an authentication server according to broadcast cryptography without using a separate public key structure.

## Description

Methods consistent with the present invention relate to authentication, and more particularly, to authenticating a device having its own device key uniquely allocated according to broadcast cryptography.

In a multimedia application field, a reproduction device that reads content from a storage medium such as a Digital Versatile Disc (DVD) or a Blu-Ray Disc (BD) and then transmits it to a portable device such as a mobile phone or a game machine is becoming increasingly commercialized. For example, a DVD player connected to a home network system may transmit a movie stored on a DVD to other devices connected to the home network system, or may transmit a game program stored on a DVD to other game machines.

Typically, authentication should be performed between the device transmitting the content (a first device) and the device receiving the content (a second device). A process of the first device authenticating the second device includes a determination of whether the second device is allowable. This determination includes the following two steps. First, it is determined if a device identifier transmitted from the second device is reliable. Then, if the device identifier is reliable, it is determined if the device identifier is included in a revocation list (RL) containing information on allowable devices and maintained by an authentication server.

The first step is to prevent a dishonest device from using the device identifier of an honest device, and the second step is to examine whether the device corresponding to the device identifier has been revoked.

Here, most conventional authentication methods use a public key structure.

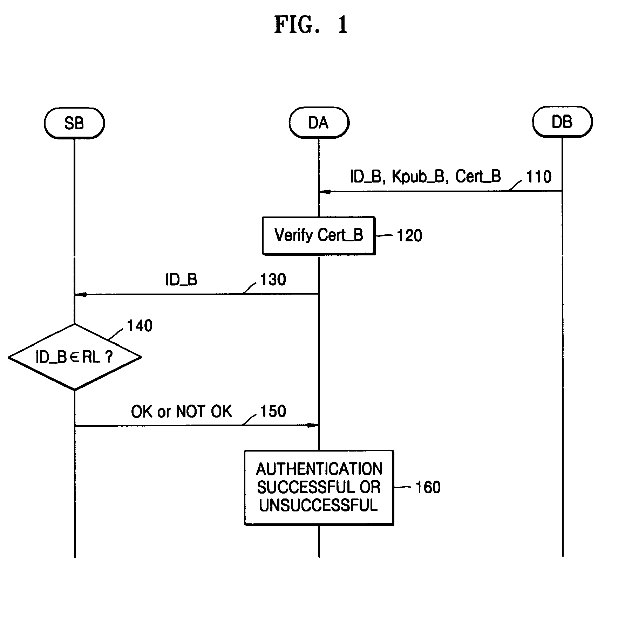

FIG. 1 illustrates a conventional authentication method using a public key structure.

In FIG. 1, the first device DA tries to authenticate the second device DB. The second device DB has a public key Kpub_B and a private key Kpri_B issued by a certification authority SA (not shown) according to a public key structure. That is, the public key Kpub_B may be freely disclosed to a third party, but the private key Kpri_B should be known by only the second device DB. According to characteristics of the private key and the public key, content encrypted by the private key can be decrypted by the public key, and content encrypted by the public key can be decrypted by the private key.

In operation 110, the second device DB transmits its identifier ID_B, its public key Kpub_B, and a certificate Cert_B, to the first device DA. The certificate Cer_B is issued by a certification authority SA and is generated by encrypting the identifier ID_B of the second device and the public key Kpub_B of the second device using a private key from the certification authority. This can be expressed as Cert_B := E(Kpri_SA, ID_B || Kpub_B), where the symbol "||" refers to a concatenation operation.

In operation 120, the first device DA generates a decrypted value, i.e., a value of the identifier of the second device concatenated with the public key of the second device, by decrypting the certificate Cert_B using a public key Kpub_SA of the certification authority. The first device DA then determines if the decrypted value is identical to a value of the identifier of the second device transmitted in operation 110 concatenated with the public key of the second device transmitted in operation 110. If the result indicates that the values are identical, it is determined that the identifier of the second device transmitted in operation 110 matches the public key of the second device transmitted in operation 110. Now, it remains to be examined whether the identifier of the second device is revoked.

In operation 130, the first device DA transmits the device identifier ID_B to the authentication server SB. The authentication server SB maintains a revocation list (RL) of revoked devices.

In operation 140, the authentication server SB determines if the device identifier ID_B transmitted in operation 130 is included in the revocation list, thereby determining if the second device DB is revoked.

In operation 150, the authentication server SB transmits the result of the determination of whether the second device DB is revoked to the first device DA.

In operation 160, the first device DA determines if the authentication of the second device DB is successful based on the result transmitted in operation 150.

However, the above-described conventional authentication method using a public key infrastructure assumes that the public key and the private key of the second device have been issued by a certification authority. Therefore, if the second device corresponds to a reproduction device, its public and private keys should have been previously issued.

Since a typical reproduction device uses a private key infrastructure (i.e., uses broadcast cryptography) rather than a public key infrastructure to determine revocation of a particular device, it would be cumbersome to apply the public key infrastructure to authenticate the reproduction device, by requiring that the certification authority is determined, and the public and private keys are issued by the certification authority.

The present invention provides a method of authenticating a reproduction device by using a device key previously stored in the reproduction device when it was manufactured, according to broadcast cryptography.

According to the present invention there is provided an apparatus and method as set forth in the appended claims. Preferred features of the invention will be apparent from the dependent claims, and the description which follows.

According to an aspect of the present invention, there is provided a method of authenticating a device having its own device key uniquely allocated by an authentication server according to broadcast cryptography, the method comprising: receiving a device identifier of the device and an encrypted device identifier generated by encrypting the device identifier with the device key; and determining if the device identifier is identical to a decrypted device identifier generated by decrypting the encrypted device identifier with a device key corresponding to the device identifier.
The method may further comprise determining if the device identifier is contained in a revocation list.

The determination of whether the device identifier is identical to the decrypted device identifier may be performed by the authentication server that allocated the device key to the device, and may comprise: determining a device key corresponding to the device identifier; generating a decrypted device identifier by decrypting the encrypted device identifier with the determined device key; and determining if the device identifier is identical to the decrypted device identifier.

Additionally, the determination of whether the device identifier is identical to the decrypted device identifier may be performed in a different device for authenticating the device, and may comprise: transmitting the device identifier and the encrypted device identifier to the authentication server that allocated the device key to the device according to broadcast cryptography; receiving the decrypted device identifier generated by decrypting the encrypted device identifier with a device key corresponding to the device identifier from the authentication server; and determining if the device identifier is identical to the decrypted device identifier.

According to yet another aspect of the present invention, there is provided a method of authenticating a first device having a first device key uniquely allocated by an authentication server according to broadcast cryptography, the method being performed by a second device and comprising: generating a random number in the second device and transmitting it to the first device; receiving a device identifier of the first device, an encrypted random number encrypted with the first device key, and an encrypted device identifier of the first device encrypted with the first device key from the first device; and determining if the device identifier is identical to a decrypted device identifier generated by decrypting the encrypted device identifier with a second device key corresponding to the device identifier.

The method may further comprise determining if the random number is identical to a decrypted random number generated by decrypting the encrypted random number with the second device key corresponding to the device identifier of the first device.

According to still another aspect of the present invention, there is provided a method of authenticating a device having a first device key uniquely allocated by an authentication server according to broadcast cryptography, the method comprising: receiving a device identifier from the device; receiving a secret value and an encrypted secret value generated by encrypting the secret value with a second device key corresponding to the device identifier; and determining if the secret value is identical to a decrypted secret value generated by decrypting the encrypted secret value with the first device key of the device.

According to yet another aspect of the present invention, there is provided a method of authenticating a first device having a first device key uniquely allocated by an authentication server according to broadcast cryptography, the method being performed in a second device and comprising: receiving a device identifier of the first device from the first device; receiving a secret value, an encrypted secret value generated by encrypting the secret value with a second device key corresponding to the device identifier of the first device, and an encrypted random number generated by encrypting a random number provided by the second device with the second device key corresponding to the device identifier of the first device; and determining if the secret value is identical to a decrypted secret value generated by decrypting the encrypted secret value with the first device key of the first device.

For a better understanding of the invention, and to show how embodiments of the same may be carried into effect, reference will now be made, by way of example, to the accompanying diagrammatic drawings in which:
FIG. 1 illustrates a conventional authentication method using a public key structure;
FIG. 2 illustrates an authentication method according to a first exemplary embodiment of the present invention;
FIG. 3 illustrates an authentication method according to a second exemplary embodiment of the present invention;
FIG. 4 illustrates an authentication method according to a third exemplary embodiment of the present invention;
FIG. 5 illustrates an authentication method according to a fourth exemplary embodiment of the present invention;
FIG. 6 illustrates an authentication method according to a fifth exemplary embodiment of the present invention;
FIG. 7 illustrates an authentication method according to a sixth exemplary embodiment of the present invention; and
FIG. 8 illustrates an authentication method according to a seventh exemplary embodiment of the present invention.

Hereinafter, exemplary embodiments of the present invention will be described in detail with reference to the accompanying drawings.

In the following description, a first device means a subject authenticating a second device. The second device has a device key set determined according to broadcast cryptography, and one of the keys in the device key set is a device key uniquely allocated to the second device.

An authentication server has a revocation list for the second device, and also has information on an identifier of the second device and the device key allocated to the second device, because the authentication server has allocated the device key set to the second device according to broadcast cryptography. The device key is one of the keys in the device key set and is uniquely allocated to a device.

Exemplary embodiments of the present invention can be applied to all kinds of devices having device keys, where a device key set is determined according to broadcast cryptography and one of the keys in the device key set is uniquely allocated to the device.

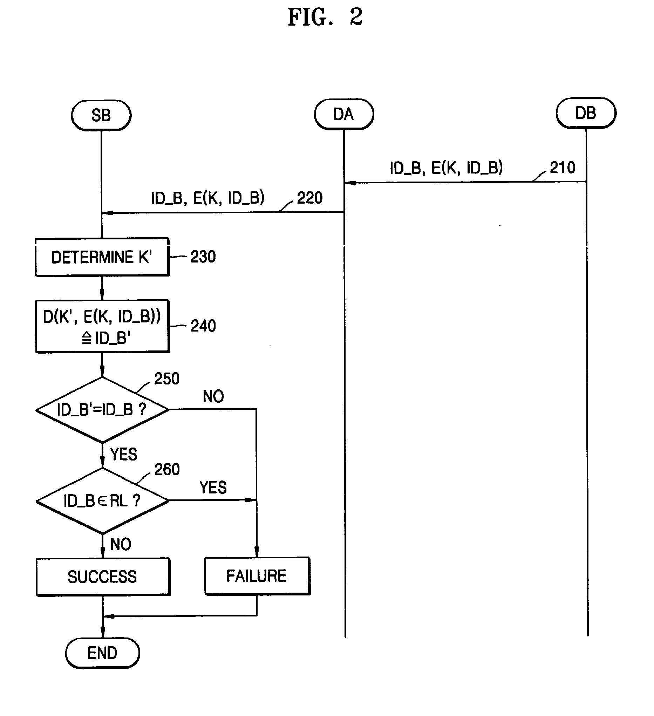

FIG. 2 illustrates an authentication method according to a first exemplary embodiment of the present invention.

In FIG. 2, a first device DA tries to authenticate a second device DB. The second device DB has a device key set allocated according to broadcast cryptography and a device key selected from the device key set and uniquely allocated to the second device DB. An authentication server SB allocates a device key set to every second device, and, for this purpose, has a device key list DKL containing information on identifiers of the second devices and device keys corresponding to every second device. In addition, the authentication server SB maintains a revocation list RL containing information on identifiers of the revoked second devices.

The purpose of the authentication is to identify if a second device trying to access the content has been revoked. For this purpose, two tests should be performed. First, it should be determined if the device identifier ID_B transmitted from the second device DB, as the device trying to access the content, is an authentic identifier of the second device DB. Second, if the device identifier is authentic, it should be determined if the revocation list RL contains the device identifier ID_B.

In operation 210, the second device DB transmits its device identifier 1D_B and an encrypted device identifier E(K, ID_B), which is encrypted by the second device DB using a device key K, to the first device DA.

In operation 220, the first device DA transmits the device identifier ID_B of the second device DB and the encrypted device identifier E(K, ID_B) transmitted in operation 210 to an authentication server SB.

In operation 230, the authentication server SB determines a device key K' corresponding to the device identifier ID_B transmitted in operation 220 by using a device key list DKL.

In operation 240, the authentication server SB generates a decrypted device identifier ID_B' by decrypting the encrypted device identifier E(K, ID_B) transmitted in operation 220 using the device key K' determined in operation 230.

In operation 250, the authentication server SB determines if the decrypted device identifier ID_B' generated in operation 240 is identical to the device identifier ID_B of the second device DB transmitted in operation 220. If so, the process goes to operation 260, and if not, the process is terminated and authentication is regarded as unsuccessful.

In operation 260, the authentication server SB determines if the device identifier ID_B of the second device DB is contained in the revocation list RL. If the device identifier ID_B is in the revocation list RL, the process is terminated and authentication is unsuccessful. If the device identifier ID_B is not in the revocation list RL, the process is terminated and authentication is successful.

In the exemplary embodiment shown in FIG. 2, the first device DA cannot recognize the device keys K and K' of the second device DB. Therefore, the first device DA can authenticate the second device DB without the device key K or the device key K' of the second device being known by the first device DA.

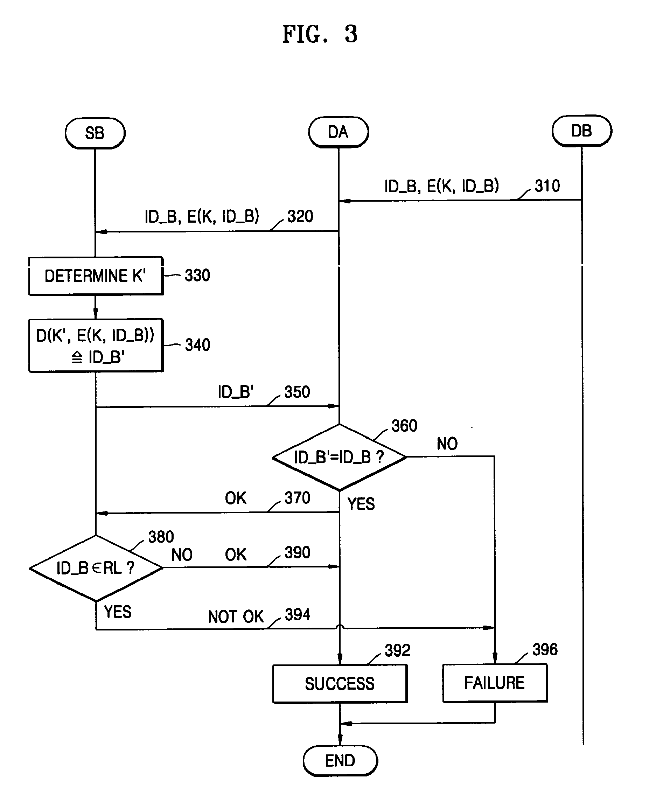

FIG. 3 illustrates an authentication method according to a second exemplary embodiment of the present invention.

In the exemplary embodiment shown in FIG. 2, operation 250 is performed by the authentication server SB. However, it is preferable, but not necessary, that operation 250 be performed by the first device DA because the objective is for the first device to authenticate the second device DB. In the exemplary embodiment shown in FIG. 3, an operation corresponding to operation 250 is performed by the first device DA. This also reduces a load on the authentication server SB.

In operation 310, the second device DB transmits its device identifier ID_B and an encrypted device identifier E(K, ID_B), generated by encrypting the device identifier ID_B with a device key K of the second device DB, to the first device DA.

In operation 320, the first device DA transmits the encrypted device identifier E(K, ID_B) and the device identifier ID_B of the second device DB to an authentication server SB.

In operation 330, the authentication server SB determines a device key K' corresponding to the device identifier ID_B transmitted in operation 320 using a device key list DKL.

In operation 340, the authentication server SB generates a decrypted device identifier ID_B' by decrypting the encrypted device identifier E (K, TD_B) transmitted in operation 320 with the device key K' determined in operation 330.

In operation 350, the authentication server SB transmits the decrypted device identifier ID_B' generated in operation 340 to the first device DA.

In operation 360, the first device DA determines if the decrypted device identifier ID_B' transmitted in operation 350 is identical to the second device identifier ID_B transmitted in operation 310. If they are identical, the process goes to operation 370; otherwise, the process is terminated and authentication is regarded as unsuccessful in operation 396.

In operation 370, the first device DA transmits an OK message to the authentication server SB.

In operation 380, the authentication server SB determines if the device identifier ID_B of the second device DB is contained in the revocation list RL.

If the device identifier ID_B is not in the revocation list RL, in operation 390, the authentication server SB transmits an OK message to the first device DA, and, in operation 392, if the first device receives the OK message, the process is terminated and authentication is successful.

If the device identifier ID_B is in the revocation list RL, in operation 394, a NOT-OK message is transmitted to the first device DA by the authentication server SB, and in operation 396, if the first device DA receives the NOT-OK message, the process is terminated and authentication is regarded as unsuccessful.

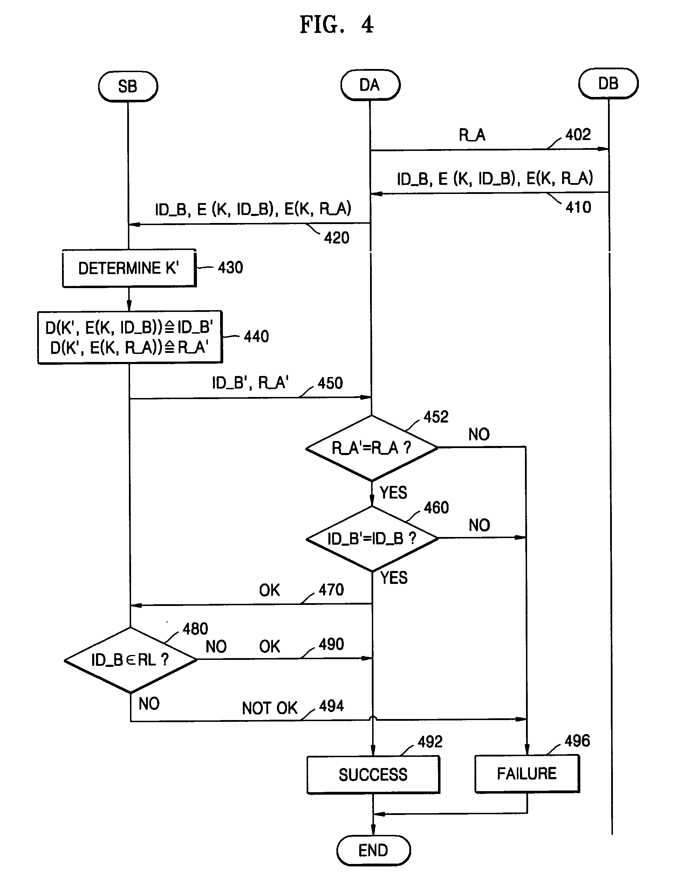

FIG. 4 illustrates an authentication method according to a third exemplary embodiment of the present invention.

In the exemplary embodiments illustrated in FIGS. 2 and 3, if a message transmitted between the first and second devices is hacked by an eavesdropper, the eavesdropper may camouflage the authentication by modulating the message. Therefore, it is necessary to limit message transmission with connected devices to only one transmission. This can be achieved by the exemplary embodiment shown in FIG. 4.

In operation 402, the first device DA generates a random number R_A and transmits it to the second device DB.

In operation 410, the second device DB transmits its device identifier ID_B, an encrypted device identifier E(K, ID_B) generated by encrypting the device identifier ID_B with a device key K at the second device DB, and an encrypted random number E(K, R_A) generated by encrypting the random number R_A with the device key K, to the first device DA.

In operation 420, the first device DA transmits the device identifier ID_B of the second device DB, the encrypted device identifier E(K, ID_B), and the encrypted random number E(K, R_A) received in operation 410, to the authentication server SB.

In operation 430, the authentication server SB determines a device key K' corresponding to the device identifier ID_B transmitted in operation 420 by using a device key list DKL.

In operation 440, the authentication server SB generates a decrypted device identifier ID_B' by decrypting the encrypted device identifier E(K, ID_B) transmitted in operation 420 with the device key K' determined in operation 430, and also generates a decrypted random number R_A' by decrypting the encrypted random number E(K, R_A) transmitted in operation 420 with the device key K' determined in operation 430.

In operation 450, the authentication server SB transmits the decrypted random number R_A' and the decrypted device identifier ID_B' generated in operation 440 to the first device DA.

In operation 452, the first device DA determines if the decrypted random number R_A' transmitted in operation 450 is identical to the random number R_A generated in operation 402. If they are identical, the process goes to operation 460, and if not, the process is terminated and authentication is regarded as unsuccessful in operation 496.

In operation 460, the first device DA determines if the decrypted device identifier ID_B' transmitted in operation 450 is identical to the device identifier ID_B transmitted in operation 410. If they are identical, the process goes to operation 470, and if not, the process is terminated and authentication is regarded as unsuccessful in operation 496. In operation 470, the first device DA transmits an OK message to the authentication server SB.

In operation 480, the authentication server SB determines if the device identifier ID_B of the second device DB is contained in a revocation list RL.

If the device identifier ID_B is not in the revocation list RL, in operation 490, the authentication server SB transmits an OK message to the first device DA, and in operation 492, if the first device DA receives the OK message, the process is terminated and authentication is regarded as successful.

If the device identifier ID_B is in the revocation list RL, in operation 494, a NOT-OK message is transmitted to the first device DA, and, in operation 496, if the first device DA receives the NOT-OK message, the process is terminated and authentication is regarded as unsuccessful.

In the exemplary embodiment shown in FIG. 4, since a random number is used in the transmission between the first device DA and the second device DB, a message sequence transmitted between the first device and the second device changes in every authentication process. Therefore, even if an eavesdropper hacks a message transmitted between the first device DA and the second device DB to obtain information such as the device identifier ID_B of the second device, it is impossible to know the random number R_A. As a result, an attempt at authentication by the hacker would fail.

In the exemplary embodiments shown in FIGS. 2 through 4, the determination of whether the device identifier ID_B of the second device DB is contained in the revocation list RL is determined by the authentication server SB. Alternatively, the first device DA may receive the revocation list RL from the authentication server SB, such that the first device DA may determine if the second device DB is revoked.

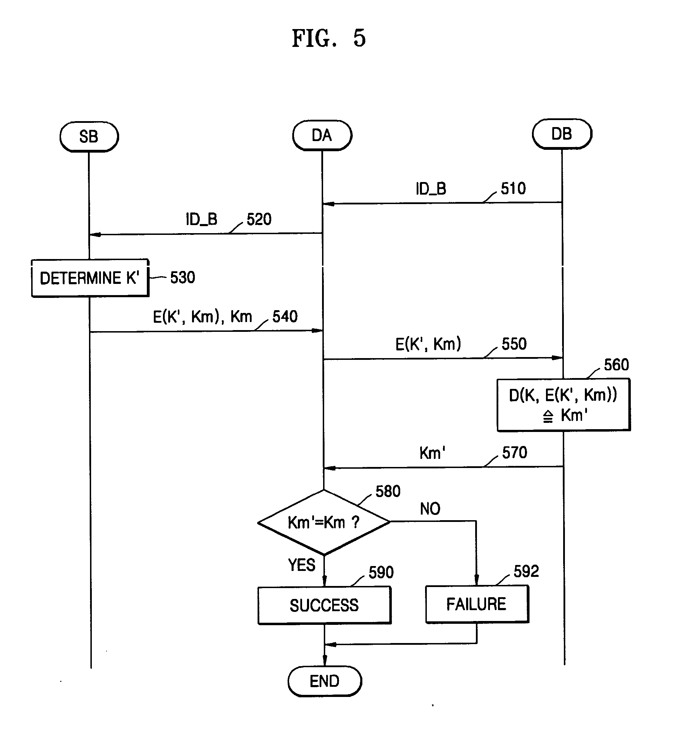

FIG. 5 illustrates an authentication method according to a fourth exemplary embodiment of the present invention.

In operation 510, a second device DB transmits its device identifier ID_B to a first device DA.

In operation 520, the first device DA transmits the device identifier ID_B transmitted in operation 510 to an authentication server SB.

In operation 530, the authentication server SB determines a device key K' corresponding to the device identifier ID_B transmitted in operation 520 by using a device key list DKL.

In operation 540, the authentication server SB generates an arbitrary secret value Km, and generates an encrypted secret value E(K', Km) by encrypting the secret value Km with the device key K' generated in operation 530. Then, the secret value Km and the encrypted secret value E(K', Km) are transmitted to the first device DA.

In operation 550, the first device DA transmits the encrypted secret value E(K', Km) transmitted in operation 540 to the second device DB.

In operation 560, the second device DB generates a decrypted secret value Km' by decrypting the encrypted secret value E(K', Km) transmitted in operation 550 with a device key K at the second device DB.

In operation 570, the second device DB transmits the decrypted secret value Km' to the first device DA.

In operation 580, the first device DA determines if the decrypted secret value Km' transmitted in operation 570 is identical to the secret value Km' transmitted in operation 540. If they are identical, the process is terminated and authentication is regarded as successful in operation 590. Otherwise, the process is terminated and authentication is regarded as unsuccessful in operation 592.

If the device key K possessed by the second device DB is authentic, the secret value Km' generated by the second device DB in operation 560 is identical to the secret value Km transmitted in operation 540. As a result, it is possible to determine whether or not the second device identifier ID_B corresponds to the device key K.

Similar to the exemplary embodiments shown in FIGS. 2 through 4, according to the exemplary embodiment shown in FIG. 5, the first device DA does not know the device key K or the device key K' of the second device DB. Therefore, the second device can be authenticated while protecting the device keys of the second device.

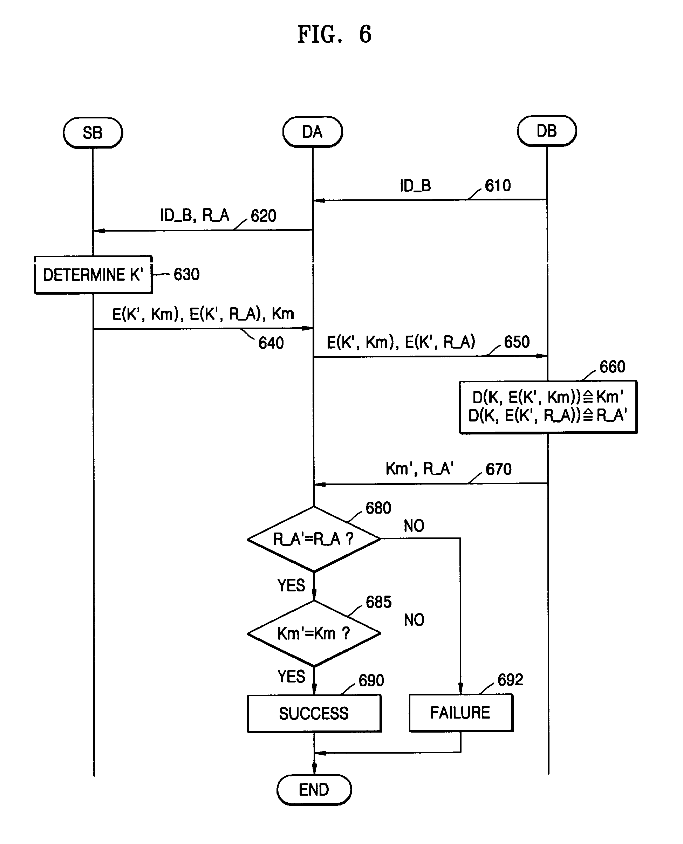

FIG. 6 illustrates an authentication method according to a fifth exemplary embodiment of the present invention.

In operation 610, a second device DB transmits its device identifier ID_B to a first device DA.

In operation 620, the first device DA generates a random number R_A and transmits it along with the device identifier ID_B transmitted in operation 610 to an authentication server SB.

In operation 630, the authentication server SB determines a device key K' corresponding to the device identifier ID_B transmitted in operation 620 by using a device key list DKL.

In operation 640, the authentication server SB generates an arbitrary secret value Km, an encrypted secret value E(K', Km) by encrypting the secret value Km with the device key K' determined in operation 630, and an encrypted random number E(K', R_A) by encrypting the random number R_A transmitted in operation 620 with the device key K'. Then, the secret value Km, the encrypted secret value E(K', Km), and the encrypted random number E(K', R_A) are transmitted to the first device DA.

In operation 650, the first device DA transmits the encrypted random number E(K', R_A) and the encrypted secret value E(K', Km) to the second device DB.

In operation 660, the second device DB generates a decrypted secret value Km' by decrypting the encrypted secret value E(K', Km) transmitted in operation 650 with the device key K at the second device DB. Then, the second device DB generates a decrypted random number R_A' by decrypting the encrypted random number E(K', R_A) transmitted in operation 650 with the device key K at the second device DB.

In operation 670, the second device DB transmits the decrypted secret value Km' and the decrypted random number R_A' to the first device DA.

In operation 680, the first device DA determines if the decrypted random number R_A' transmitted in operation 670 is identical to the random number R_A generated in operation 620. If they are identical, the process goes to operation 685, and if not, the process is terminated and authentication is regarded as unsuccessful in operation 692.

In operation 685, the first device DA determines if the decrypted secret value Km' transmitted in operation 670 is identical to the secret value Km transmitted in operation 640. If they are identical, the process is terminated and authentication is regarded as successful in operation 690. Otherwise, the process is terminated and authentication is regarded as unsuccessful in operation 692.

Similar to the exemplary embodiment shown in FIG. 5, if the device key K at the second device is authentic, the secret value Km' generated by the second device in operation 660 is identical to the secret value Km transmitted in operation 640. As a result, it is possible to determine if the second device identifier ID_B corresponds to the device key K.

Unlike the exemplary embodiment shown in FIG. 5, according to the exemplary embodiment shown in FIG. 6, since a random number is used in the message sequence transmitted between the first device DA and the second device DB, a message transmitted between the first device and the second device changes in every authentication process. Therefore, even if an eavesdropper hacks the message sequence transmitted between the first and second devices to obtain information such as the second device identifier, since it is impossible to know the random number R_A, an attempt at authentication by the hacker would fail.

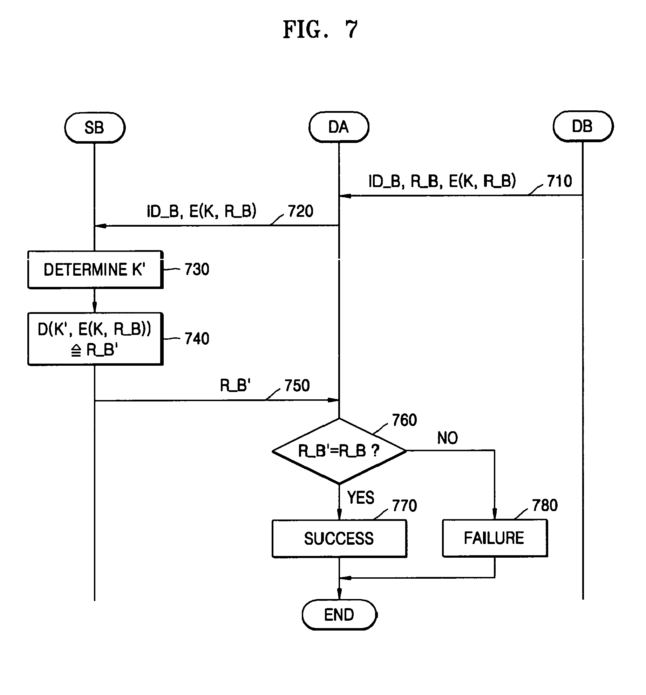

FIG. 7 illustrates an authentication method according to a sixth exemplary embodiment of the present invention.

In operation 710, a second device DB generates a random number R_B and an encrypted random number E(K, R_B) by encrypting the random number R_B with a device key K of the second device. Then, the random number R_B, the encrypted random number E(K, R_B), and a device identifier ID_B of the second device are transmitted to the first device DA.

In operation 720, the first device DA transmits the identifier ID_B of the second device DB and the encrypted random number E(K, R_B) to the authentication server SB. Like in the above exemplary embodiments, the authentication server SB, functioning as an authentication server of the second device DB, contains information on a device key K' of the second device. In operation 730, the authentication server SB determines a device key K' corresponding to the identifier ID_B of the second device transmitted in operation 720.

In operation 740, the authentication server SB generates a decrypted random number R_B' by decrypting the encrypted random number E(K, R_B) transmitted in operation 720 with the device key K'.

In operation 750, the authentication server SB transmits the decrypted random number R_B' to the first device DA. According to another exemplary alternative embodiment, the decrypted random number R_B' may be transmitted to the first device DA by using a public key structure to prevent hacking.

In operation 760, the first device DA determines if the decrypted random number R_B' transmitted in operation 750 is identical to the random number R_B transmitted in operation 710. If the device key transmitted from the second device DB to the first device DA in operation 710 is authentic, the decrypted random number R_B' will be identical to the random number R_B.

If the two numbers are identical as a result of operation 760, the first device DA regards the authentication of the second device DB as successful, in operation 770. Otherwise, the first device DA regards the authentication of the second device DB as unsuccessful and terminates the process, in operation 780.

If the first device DA has a device key allocated according to broadcast cryptography and the same broadcast encryption tree is used for the first device DA and the second device DB, the authentication server SB contains information on the device key of the first device DA. Therefore, according to another exemplary embodiment of the present invention, the second device DB may also authenticate the first device DA in connection with the authentication server SB. In a process of the second device authenticating the first device, the roles of the first and second devices are exchanged and operations similar to operations 710 through 780 are used.

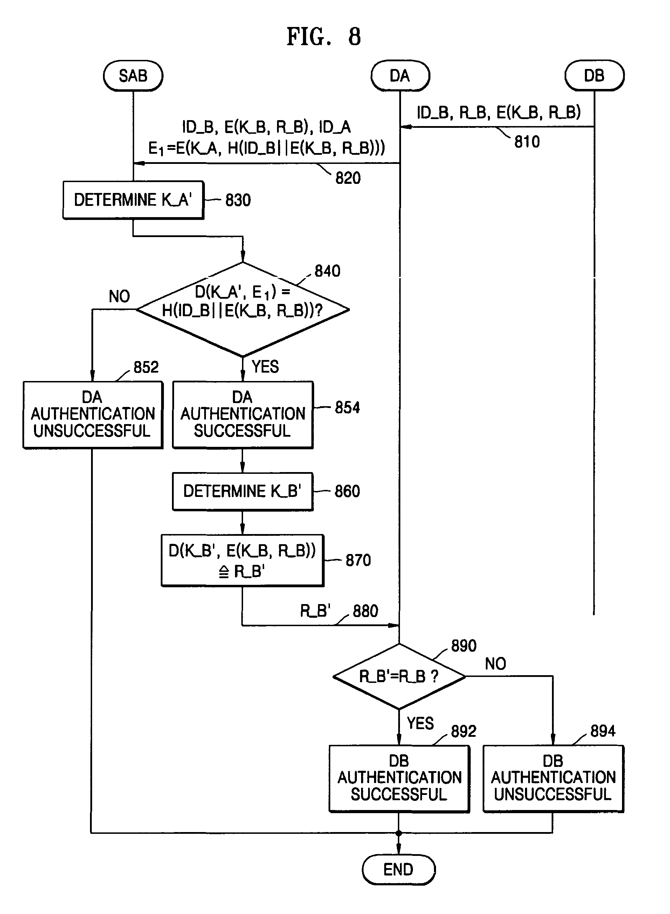

On the other hand, when the authentication server SB also functions as an authentication server of the first device DA, that is, when the authentication server SB also contains information on a device key of the first device, the authentication method shown in FIG. 8 may be correspondingly adopted.

FIG. 8 illustrates an authentication method according to a seventh exemplary embodiment of the present invention.

If the authentication server contains information on the device keys of the first and second devices, even when only one of the first and second devices is connected to the authentication server, both devices can be authenticated by using only one of them.

In operation 810, the second device DB generates a random number R_B and an encrypted random number E(K_B, R_B) by encrypting the random number R_B with a device key K_B of the second device. Then, the identifier ID_B of the second device DB, the random number R_B, and the encrypted random number E(K B, R_B) are transmitted to the first device DA.

In operation 820, the first device DA generates a first hash value H₁=H(ID_B | | E(K_B, R_B)) by hashing the identifier ID_B of the second device DB and the encrypted random number E(K B, R_B) , and also generates an encryption value E₁=E(K_A, H(ID_B | |E(K_B, R_B))) by encrypting the first hash value H₁ with a device key K_A of the first device DA. Then, the identifier ID_A of the first device, the identifier ID_B of the second device, the encrypted random number E(K_B, R_B), and the encryption value E₁=E(K_A, H(ID_B | | E(K_B, R_B))) are transmitted to the authentication server SAB.

The authentication server SAB is used as an authentication server of the first device DA as well as the second device DB. In other words, the authentication server SAB contains information on the identifier ID_A and a device key K_A' of the first device DA as well as the identifier ID_B and a device key K_B' of the second device DB.

In operation 830, the authentication server SAB determines the device key K_A' corresponding to the device identifier ID_A of the first device DA transmitted in operation 820.

In operation 840, the authentication server SAB generates a second hash value H₂=H(ID_B | | E(K_B, R_B)) by hashing the encrypted random number E(K_B, R_B) and the device identifier ID_B of the second device DB transmitted in operation 820, and also generates a decryption value D₁=D(K_A', E₁) by decrypting the encryption result E₁ with the device key K_A' determined in operation 830. Then, it is determined if the second hash value H₂ is identical to the decryption value D₁.

If the device key K_A of the first device DA used to encrypt the first hash value H₁ in operation 820 corresponds to the device identifier ID A, that is, if the device key K_A is identical to the device key K_A', the result of operation 840 shows that the second hash value H₂ is identical to the decryption value D₁.

In operation 852, if the result of operation 840 shows that the second hash value H₂ is not identical to the decryption value D₁, the second device DB regards the authentication of the first device DA as unsuccessful and the process is terminated.

In operation 854, if the result of operation 840 shows that the second hash value H₂ is identical to the decryption value D₁, the second device DB regards the authentication of the first device DA as successful and the process goes to operation 860.

In operation 860, the authentication server SAB determines the device key K_B' corresponding to the identifier ID_B of the second device transmitted in operation 820.

In operation 870, the authentication server SAB generates a decrypted random number R_B' by decrypting the encrypted random number E (K_B, R_B) transmitted in operation 820 with the device key K_B' determined in operation 860.

In operation 880, the authentication server SAB transmits the decrypted random number R_B' to the first device DA. In operation 890, the first device DA determines if the decrypted random number R_B' transmitted in operation 880 is identical to the random number R_B transmitted in operation 810. If the device key K_B transmitted from the second device DB to the first device DA in operation 810 is authentic, the decrypted random number R_B' will be identical to the random number R_B.

If the result of operation 890 shows that the decrypted random number R_B' is identical to the random number R_B, the first device DA regards the authentication of the second device DB as successful, in operation 892. Otherwise, the first device DA regards the authentication of the second device DB as unsuccessful and the process is terminated, in operation 894.

According to the exemplary embodiment shown in FIG. 8, the authentication server SAB contains information on the device keys of the first and second devices. Also, even when only one of the first and second devices is connected to the authentication server SAB, both of them can be authenticated.

According to another exemplary embodiment of the present invention, the authentication server SAB may be one of the authentication servers SA and SB. However, in this case, the authentication servers SA and SB should share information on device keys of the first and second devices with each other.

In addition, according to another exemplary embodiment of the present invention, operation 890 may be performed in the authentication server SAB rather than in the first device DA. In this case, the random number R_B transmitted to the first device in operation 810 should be transmitted to the authentication server SAB.

In all of the exemplary embodiments of the present invention, the device key of the second device is not known to the first device and the device key of the first device is not known to the second device. Therefore, each device can be authenticated while broadcast cryptography is maintained.

The authentication method according to an exemplary embodiment of the present invention can also be embodied as computer code recorded on a computer-readable recording medium. Functional programs, codes, and code segments for accomplishing the authentication method can be easily construed by programmers skilled in the art to which the present invention pertains. The computer-readable recording medium is any data storage device that can store data which can be thereafter read by a computer system. Examples of the computer-readable recording medium include a read-only memory (ROM), a random-access memory (RAM), a CD-ROM, a magnetic tape, a floppy disk, an optical data storage device, and carrier waves such as in the case of a data transmission over the Internet.

According to the present invention, it is possible for a method of authenticating a device having its own device key allocated according to broadcast encryption to be performed without using a separate public key structure.

Additionally, even if the authentication server contains information on the device keys of the first and second devices and only one of the two devices is connected to the authentication server, both devices can still be authenticated.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of authenticating a first device having a first device key uniquely allocated by an authentication server according to broadcast cryptography, the method comprising:
receiving a device identifier of the first device and an encrypted device identifier generated by encrypting the device identifier using the first device key; and
determining if the device identifier is identical to a decrypted device identifier generated by decrypting the encrypted device identifier with a second device key corresponding to the device identifier.

2. The method according to claim 1, further comprising determining if the device identifier is contained in a revocation list.

3. The method according to claim 1 or claim 2, wherein determining if the device identifier is identical to the decrypted device identifier is performed by the authentication server that allocated the first device key to the first device.

4. The method according to claim 3, wherein determining if the device identifier is identical to the decrypted device identifier comprises:
determining the second device key corresponding to the device identifier;
generating the decrypted device identifier by decrypting the encrypted device identifier with the second device key; and
determining if the device identifier is identical to the decrypted device identifier.

5. The method according to any preceding claim, wherein determining if the device identifier is identical to the decrypted device identifier is performed in a second device for authenticating the first device.

6. The method according to claim 5, wherein determining if the device identifier is identical to the decrypted device identifier comprises:
transmitting the device identifier and the encrypted device identifier to the authentication server that allocated the first device key to the first device according to broadcast cryptography;
receiving the decrypted device identifier generated by decrypting the encrypted device identifier with the second device key corresponding to the device identifier from the authentication server;
determining if the device identifier is identical to the decrypted device identifier.

7. A method of authenticating a first device having a first device key uniquely allocated by an authentication server according to broadcast cryptography, the method being performed by a second device and comprising:
generating a random number in the first device and transmitting the random number to the second device;
receiving a device identifier of the first device, an encrypted random number generated by encrypting the random number with the first device key, and an encrypted device identifier of the first device generated by encrypting the device identifier of the first device with the first device key; and
determining if the device identifier is identical to a decrypted device identifier generated by decrypting the encrypted device identifier with a second device key corresponding to the device identifier.

8. The method according to claim 7, further comprising determining if the random number is identical to a decrypted random number generated by decrypting the encrypted random number with the second device key corresponding to the device identifier.

9. The method according to claim 8, wherein determining if the random number is identical to the decrypted random number comprises:
transmitting the device identifier and the encrypted random number to the authentication server which allocated the first device key to the first device according to broadcast cryptography;
receiving the decrypted random number generated by decrypting the encrypted random number with the second device key corresponding to the device identifier from the authentication server; and
determining if the random number is identical to the decrypted random number.

10. The method according to claim 7, claim 8 or claim 9, further comprising determining if the device identifier is contained in a revocation list.

11. The method according to any one of claims 7 to 10, wherein determining if the device identifier is identical to the decrypted device identifier is performed by the authentication server that allocated the first device key to the first device.

12. The method according to claim 11, wherein determining if the device identifier is identical to the decrypted device identifier comprises:
determining a second device key corresponding to the device identifier:
generating a decrypted device identifier by decrypting the encrypted device identifier with the second device key; and
determining if the device identifier is identical to the decrypted device identifier.

13. The method according to any one of claims 7 to 12, wherein determining if the device identifier is identical to the decrypted device identifier is performed by the second device.

14. The method according to claim 13, wherein determining if the device identifier is identical to the decrypted device identifier comprises:
transmitting the device identifier and the encrypted device identifier to the authentication server which allocated the first device key generated according to broadcast cryptography to the first device;
receiving the decrypted device identifier generated by decrypting the encrypted device identifier with the second device key corresponding to the device identifier from the authentication server; and
determining if the device identifier is identical to the decrypted device identifier.

15. A method of authenticating a device having a first device key uniquely allocated by an authentication server according to broadcast cryptography, the method comprising:
receiving a device identifier from the device;
receiving a secret value and an encrypted secret value generated by encrypting the secret value with a second device key corresponding to the device identifier; and
determining if the secret value is identical to a decrypted secret value generated by decrypting the encrypted secret value with the device key of the device.

16. The method according to claim 15, wherein the encrypted secret value is generated by the authentication server that allocated the first device key to the device.

17. The method according to claim 16, wherein determining if the secret value is identical to the decrypted secret value comprises:
determining the second device key corresponding to the device identifier; and
generating the secret value and encrypting the secret value with the second device key.

18. A method of authenticating a first device having a first key uniquely allocated by an authentication server according to broadcast cryptography, the method being performed in a second device and comprising:
receiving a device identifier of the first device from the first device;
receiving a secret value, an encrypted secret value generated by encrypting the secret value with a second device key corresponding to the device identifier of the first device, and an encrypted random number generated by encrypting a random number provided by the second device with the second device key corresponding to the device identifier of the first device; and
determining if the secret value is identical to a decrypted secret value generated by decrypting the encrypted secret value with the first device key of the first device.

19. The method according to claim 18, further comprising determining if the random number is identical to a decrypted random number generated by decrypting the encrypted random number with the first device key of the first device.

20. The method according to claim 18 or claim 19, wherein the encrypted secret value is generated by the authentication server that allocated the first device key to the first device.

21. The method according to claim 20, wherein determining if the secret value is identical to the decrypted secret value comprises:
determining the second device key corresponding to the device identifier of the first device; and
generating the secret value and encrypting the secret value with the second device key.

22. A method of authenticating a first device having a first device key uniquely allocated by an authentication server according to broadcast cryptography, the method being performed in a second device and comprising:
receiving a device identifier of the first device, a random number generated by the first device, and an encrypted random number generated by encrypting the random number using the first device key of the first device; and
determining if the random number transmitted from the first device is identical to a decrypted random number generated by decrypting the encrypted random number with a second device key corresponding to the device identifier of the first device.

23. The method according to claim 22, wherein the decrypted random number is generated by the authentication server that allocated the first device key to the first device.

24. The method according to claim 23, wherein determining if the random number is identical to the decrypted random number comprises:
transmitting the device identifier of the first device and the encrypted random number to the authentication server;
determining the second device key corresponding to the device identifier of the first device;
generating the decrypted random number by decrypting the encrypted random number with the second device key; and
determining if the random number is identical to the decrypted random number.

25. A method of authenticating a first device having a first device key uniquely allocated by an authentication server according to broadcast cryptography, and a second device having a second device key uniquely allocated by the authentication server, the method comprising:
transmitting a first device identifier of the first device, a random number generated by the first device, and an encrypted random number generated by encrypting the random number with the first device key of the first device, from the first device to the second device;
generating a first hash value by hashing the first device identifier of the first device and the encrypted random number, and then generating an encryption value by encrypting the first hash value with the second device key of the second device; and
transmitting the first device identifier of the first device, a second device identifier of the second device, the encrypted random number, and the encryption value to the authentication server,
wherein the authentication server contains information on a third device key corresponding to the first device identifier of the first device and a fourth device key corresponding to the second device identifier of the second device, and authenticates the first and second devices with said information.

26. The method according to claim 25, wherein the authentication server authenticates the second device by determining if a decryption value generated by decrypting the encryption value with the fourth device key corresponding to the second device identifier of the second device is identical to a second hash value generated by hashing the first device identifier of the first device and the encrypted random number.

27. The method according to claim 25 or claim 26, wherein the authentication server authenticates the first device by determining if the random number is identical to a decrypted random number generated by decrypting the encrypted random number with the third device key corresponding to the first device identifier of the first device.

28. The method according to claim 27, wherein the authentication of the first device is performed by the second device.

29. A computer readable recording medium having stored thereon a program for executing a method of authenticating a first device having a first device key uniquely allocated by an authentication server according to broadcast cryptography, the method comprising:
receiving a device identifier of the first device and an encrypted device identifier generated by encrypting the device identifier using the first device key; and
determining if the device identifier is identical to a decrypted device identifier generated by decrypting the encrypted device identifier with a second device key corresponding to the device identifier.
